# EUROPEAN PATENT APPLICATION

(11) **EP 4 195 467 A1**
(43) Date of publication of application: **14.06.2023**
(21) Application number: 21213722.8
(22) Date of filing: 10.12.2021
(51) Int. Cl.: H02K 9/06, H02K 11/20, H02K 16/04

(54) **MOTOR COOLING FAN ENERGY HARVESTER**

(71) Applicant: ABB SCHWEIZ AG, 5400 Baden (CH)
(72) Inventor: SUTTON, Felix, 8048 Zürich (CH); SOMMER, Philipp, 8003 Zürich (CH); MARET, Yannick, 5405 Dättwil (CH)
(74) Representative: Zimmermann & Partner Patentanwälte mbB

(57) **Abstract**

An electric machine (100, 200) is described. The electric machine comprises an electric motor, and an annular fan (120) for ventilating the motor. The annular fan (120) comprises a fan rotor having at least one blade (121) and at least one permanent magnet (123). The electric machine further comprises a coil (140), wherein the fan (120) and the coil (140) are configured to generate electricity when the at least one permanent magnet passes the coil (140) for powering an auxiliary device (230).

## Description

### TECHNICAL FIELD

Embodiments of the present disclosure relate to an electric machine.

### BACKGROUND

Motors are an integral component for a wide-range of applications, and especially in industrial systems. The reliability of such motors is extremely important due to the high efficiency and safety-critical nature of industrial systems, particularly in the oil & gas, food and beverage, (discrete) manufacturing and pharmaceutical industries.

Oftentimes, motors or electric machines includes one or more electrically powered auxiliary devices coupled to the motor. An energy source is used to power the auxiliary device. Commonly, batteries are used for this purpose. However, batteries have a finite lifetime, are costly to replace, and have adverse environmental effects.

There is a continuous demand for improved motors and electric machines. In particular, there is a need for electric machines with improved means for powering auxiliary devices, and in particular without having to rely on batteries for powering auxiliary devices.

### SUMMARY

In light of the above, an electric machine according to independent claim 1 is provided. Further aspects, advantages, and features are apparent from the dependent claims, the description, and the accompanying drawings.

According to an aspect of the present disclosure, an electric machine is provided. The electric machine includes an electric motor and an annular fan for ventilating the motor. The annular fan includes a fan rotor having at least one blade and at least one permanent magnet. The electric motor further includes a coil. The fan and the coil are configured to generate electricity when the at least one permanent magnet passes the coil for powering an auxiliary device.

The electric motor of the present disclosure is not particularly limited, but preferably complies with IEC (International Electrotechnical Commission) standards and/or NEMA (National Electrical Manufacturers Association) standards. The electric machine is also not particularly limited, but may be particularly suitable for use in any of the oil and gas, food and beverage, and pharmaceutical industries.

The annular fan is provided for cooling the electric motor. The annular fan is preferably arranged at a rear end of the electric machine.

The fan is typically configured to be driven by the electric motor, preferably by a motor shaft of the electric motor. The electric motor may include the motor shaft, a motor rotor fixedly connected to the motor shaft, and a motor stator. The fan may be fixedly connected to the motor shaft. The fan rotor, and in particular the at least one blade, may turn or rotate when the motor is operational or active.

According to an embodiment, the fan is axially spaced apart from the motor rotor along the shaft. The at least one permanent magnet, and/or the coil may each be spaced apart from the motor rotor along the shaft.

Each of the fan, the at least one permanent magnet, and the coil are preferably separate components provided in addition to the electric motor and are not part of the motor. For example, the stator of the motor may also include one or more motor coils, and/or the electric motor may include permanent magnets, which are provided in addition to the fan, the at least one permanent magnet, and the coil.

The at least one permanent magnet may be affixed to the fan rotor. Alternatively, the at least one permanent magnet may be integrally formed with the fan rotor. The magnet is a moving component of the electric machine and rotates with the fan rotor when the electric motor is operational.

The coil is preferably fixedly connected to the electric machine and is non-moving or stationary. The coil may be arranged in the vicinity of the fan rotor, such as around the fan rotor or adjacent to the fan rotor. In other words, the coil is preferably placed close to the rotation path of the fan rotor.

The coil may essentially overlap with the fan rotor axially and/or may be radially spaced apart from the radial outer end of the fan rotor. Alternatively, the coil may essentially overlap with the fan rotor radially and/or be axially spaced apart from the radial outer end of the fan rotor.

The fan and the coil are configured to generate electricity when the at least one permanent magnet passes or rotates past the coil. The coils may be arranged and/or oriented such that a static magnetic field of the permanent magnatic passes through the core of the coil and induces a voltage. The at least one permanent magnet is configured to induce a voltage when passing the coil, or in other words is configured to induce a voltage when the at least one permanent magnet is within the vicinity of the coil. The permanent magnet(s) may be orientated such that the coil induces a voltage by the magnetic field provided by the magnet(s).In an alternative embodiment, the fan rotor may include at least one coil as a moving part, and the electric machine may include a permanent magnet as a non-moving component. Other aspects of this alternative embodiment may be combined accordingly with any embodiment described in the present disclosure.

The electric machine according to the present disclosure enables generating electricity by harvesting energy from the cooling fan of a motor. The induced (alternating) voltage can be used for driving an electrically powered auxiliary device, such as to power electronics placed on the outside of the motor. Beneficially, a battery is not needed for powering the auxiliary device. The electric machine of the present disclosure can be operated for extended periods of time without requiring maintenance or exchanging components, such as a battery.

The induced AC voltage signal generated by the fan and the coil may then be rectified and regulated, before being used to power auxiliary devices, such as electronics attached to a frame or housing of the motor. The electric machine may further include a rectifier connected to the coil for supplying a voltage, such as a DC voltage, to the auxiliary device. Alternatively, the auxiliary device may include a rectifier connected to the coil for supplying a voltage, such as a DC voltage, to the auxiliary device.

According to an embodiment, the at least one permanent magnet is arranged at a radial outer end portion of the fan rotor. The permanent magnet may be arranged at the radial outer end of the fan rotor. Typically, the annular fan may include a plurality of permanent magnets. The permanent magnets may be spaced around the fan rotor, such as equidistantly spaced around the fan rotor.

In one embodiment, the permanent magnet is arranged at the tip of the at least one blade. The permanent magnet may be affixed to the blade or integrally formed with the blade, such as by forming the tip section of the blade from a magnetic material. Typically, the annular fan may include a plurality of permanent magnets. In one illustrative embodiment, the fan rotor includes a permanent magnet arranged at the tip of each blade. Other configurations are also possible, such as providing a permanent magnet on every second blade.

In another embodiment, the fan includes an annular frame attached to the radial outer end of the one or more blades. The annular frame includes at least one permanent magnet, and preferably a plurality of permanent magnets, arranged on or within the annular frame. The permanent magnet(s) may be affixed to the annular frame or integrally formed with the annular frame. In case a plurality of magnets are provided, the plurality of permanent magnets may be spaced around the annular frame, such as equidistantly spaced around the backplate.

In another embodiment, the fan includes a backplate. The one or more permanent magnets may be arranged at a radial outer portion of the backplate. Typically, the annular fan may include a plurality of permanent magnets. The permanent magnets may be spaced around the backplate, such as equidistantly spaced around the backplate. The backplate may be solid only on an outer rim of the backplate and contain several openings in a radial inner portion of the backplate to allow for sufficient airflow to the electric motor.

The coil is typically disposed adjacent to a radial outer perimeter defined by the fan rotor, and in particular defined by the tip(s) of the blade(s). Illustratively, the coil may be arranged radially outward of the radial outer perimeter and/or axially essentially aligned with the fan rotor. Preferably, there is essentially no axial offset between the coil and the fan rotor. In another exemplary embodiment, the coil may be axially spaced apart from the fan rotor and/or radially essentially aligned with the permanent magnet(s).

In one embodiment, the electric machine includes a plurality of coils. The coils may be spaced around the radial outer perimeter defined by the fan rotor, such as equidistantly spaced around the radial outer perimeter.

The electric machine may further include a housing or a cover. The housing may include several housing components which are releasably attached to each other. The housing may include a motor housing, and a fan housing which is attached or attachable to the motor housing. In some embodiments, the housing may further include a terminal box housing. The terminal box housing may be attached or attachable to the motor housing.

The one or more coils may be arranged within the housing, in particular the fan housing. Typically, the coil(s) may be fixedly attached to or embedded in the housing, such as the fan housing.

According to an embodiment, the electric machine includes the auxiliary device. The auxiliary device may be enclosed in the housing of the electric machine, such as the motor housing or, if present, the terminal box housing. Alternatively, the auxiliary device may include an enclosed device housing. The device housing may be affixed on the housing of the electric machine, such as the motor housing.

The auxiliary device is an electrically powered device. The device is a small-scale device with low power consumption. The device is configured to perform an auxiliary or ancillary activity for the electric motor. For example, the device may be configured for sensing or monitoring a parameter which characterises the condition of the motor. The auxiliary device is preferably electrically connected to the coil(s), and configured to be powered by the fan and the coil(s) when the electric motor is active or operational.

The electric machine may further include a power supply line extending from the coil to the auxiliary device for powering the device by electrical power from the coil.

According to an embodiment, the auxiliary device is a condition sensing device, and in particular a condition monitoring device, for monitoring the electric machine. An example of a condition sensing device is the ABB Smart Sensor.

The condition sensing device may include the terminal block housing. The condition sensing device may include a plurality of terminal connectors, in particular arranged at the terminal block housing.

Each of the terminal connectors may have a first contact terminal configured to receive a power-source connection line of an external electric power source. Each of the terminal connectors may have a second contact terminal configured to receive a respective motor connection line to the electric motor, for establishing an electrical connection between the external electric power source and the electric motor.

The coil(s) and/or the auxiliary device are typically galvanically isolated from the external electric power source of the electrical motor, and in particular from the stator coils of the electric motor.

The condition sensing device may further include a sensor unit that is configured to measure a parameter, in particular a diagnostics parameter, and to provide sensor measurement data indicative of the parameter, preferably comprising a vibration sensor, an acoustic sensor, a temperature sensor, a humidity sensor and/or a magnetic flux sensor.

The condition sensing device may further include a processor that is configured to receive sensor measurement data indicative of the (diagnostics) parameter provided by the sensor unit, to process the sensor measurement data, and to provide a processing output indicative of a result of the processing of the sensor measurement data.

The condition sensing device may optionally include a signaling unit that receives the processing output and is configured to further relay the processing output.

According to an embodiment, the processor is configured to process the sensor measurement data according to a diagnostics algorithm and to provide a diagnostics-result signal indicative of a result of the application of the diagnostics algorithm on the sensor measurement data.

The signaling unit may receive the diagnostics-result signal and may be configured to provide a human-perceivable diagnostics-indication signal that is indicative of the diagnostics-result signal.

The signaling unit may be a wireless communication unit that receives the processing output of the processor and may be configured to transmit the processing output wirelessly to an external reception device.

In an embodiment, the signaling unit is a wire-bound communication interface.

The condition monitoring device may further comprise a sensor-input terminal that is configured to receive the sensor measurement data from an external sensor unit.

The condition monitoring device may further include a power supply unit that is configured to provide electrical power to the processor and/or the signaling unit. The electrical power supply unit may further comprise an electrical-energy storage unit. The electrical power supply unit may be electrically connected to the coil.

According to an embodiment, the processor is attached to an outside wall of the housing.

The condition sensing device may further include a mounting element for mechanically mounting the terminal block housing to the electric motor.

According to an embodiment, the electric machine may further include a diagnostics-visualization unit at least partly located within the condition sensing device, the diagnostics-visualization unit including a diagnostics device that is configured to determine an operating condition of the electric motor, and to provide an optical-output control signal indicative of the operating condition. The diagnostics-visualization unit may further comprise an optical output unit that receives the optical-output control signal and is configured to provide an optical output signal according to the optical-output control signal.

The optical output unit may include a display unit that receives the optical-output control signal and is configured to display, as the optical output signal, a visualization of the operating condition.

The optical output unit may include a light-emitting device that is configured to emit an infrared light signal as the optical output signal.

The optical output unit may include a light-emitting device that is configured to emit a human-perceivable light signal as the optical output signal.

Those skilled in the art will recognise additional features and advantages upon reading the following detailed description, and upon viewing the accompanying drawings.

### BRIEF DESCRIPTION OF THE DRAWINGS

The components in the Figures are not necessarily to scale, instead emphasis being placed upon illustrating the principles of the invention. Moreover, in the Figures, like reference signs designate corresponding parts. The accompanying drawings relate to embodiments of the disclosure and are described in the following:
Fig. 1 shows a schematic view of an electric machine according to embodiments described herein;
Fig. 2 shows a schematic view of an electric machine according to embodiments described herein.

### DETAILED DESCRIPTION OF EMBODIMENTS

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment can apply to a corresponding part or aspect in another embodiment as well.

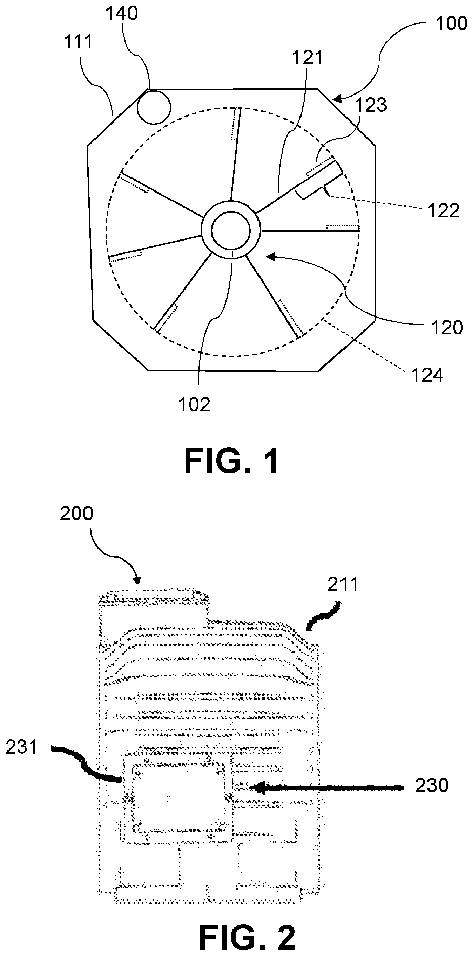

With exemplary reference to Fig. 1, an electric machine 100 is described. Figure 1 shows a rear view of the electric machine 100. The electric machine 100 includes a housing 111. For illustration purposes, some portions of the housing are not shown in Figure 1. The housing includes a motor housing (shown in Figure 1) and a fan housing or rear cover (not shown in Figure 1).

The electric machine 100 includes an electric motor. The electric motor is largely not visible in Figure 1. The motor includes a motor shaft 102, a motor rotor fixedly connected to the motor shaft 102, and a motor stator.

The electric machine 100 further includes an annular fan 120 for ventilating or cooling the motor. The fan rotor includes an annular inner portion which is fixedly connected to the motor shaft 102. The fan rotor is therefore driven by the motor shaft when the motor is active.

The fan rotor further includes several blades 121. Figure 1 depicts the fan rotor having seven rotor blades 121. The fan rotor further includes at least one permanent magnet 123. In the embodiment shown in Figure 1, the permanent magnets 123 are arranged at a radial outer end portion 122 of the fan rotor, and in particular at the tip of each of the seven rotor blades 121.

The electric machine 100 also includes one or more coils 140. In the embodiment shown in Figure 1, the electric machine 100 includes just one coil 140, however, several coils may also be included arranged at different positions within the vicinity of the fan rotor.

The fan 120, the permanent magnets 123 and the coil 140 are provided as separate components in addition to the electric motor, and do not form part of the motor, such as the motor stator or motor rotor.

The permanent magnets 123 - being driven by the motor shaft 102 - moves or rotates while the motor is active, while the coil 140 is non-moving and fixedly connected to the electric machine 100.

The fan 120 and the coil 140 are configured to generate electricity when the motor, and in particular the motor shaft 102, is active. A voltage is induced when the permanent magnets 123 pass or rotate past a core of the coil 140. The electricity may be used to power an electrically powered auxiliary device (not shown in Figure 1).

The fan rotor, and in particular the tips of the rotor blades 121, define a radial outer perimeter 124. The coil 140 is arranged adjacent to the radial outer perimeter such that the coil is in the vicinity of the permanent magnets 123 when the motor is active. In the embodiment shown in Figure 1, the coil 140 is disposed radially outward of the radial outer perimeter 124, and there is essentially no axial offset between the coil 140 and the fan rotor.

The coil 140 is arranged within the housing, and is fixedly connected to an inner side of the housing 111. In the embodiment shown in Figure 1, the coil 140 is attached to the motor housing, however, the coil may also be attached to other parts of the housing, such as the fan housing or rear cover.

Figure 2 shows a top view of an electric machine 200. The electric machine 200 includes a housing 211. The electric machine 200 further includes an auxiliary device 230. The auxiliary device 230 is a condition sensing device for monitoring the electric machine, such as the ABB Smart Sensor.

The condition sensing device 230 includes an enclosed device housing 231 which is affixed on the housing 211 of the electric machine 200. The auxiliary device 230 is electrically connected to the coil 140 of the electric machine 200 (not shown in Figure 2), and is electrically powered by the voltage induced by the permanent magnets of the fan 120 when passing the coil 140.

While the foregoing is directed to embodiments, other and further embodiments may be devised without departing from the basic scope, and the scope is determined by the claims that follow.

### REFERENCE NUMERALS

- 100, 200: electric machine
- 102: motor shaft
- 111,211: housing
- 120: annular fan
- 121: blade
- 122: radial outer end portion
- 123: permanent magnet
- 124: perimeter
- 140: coil
- 230: auxiliary device
- 231: enclosed device housing

## Claims

1. An electric machine (100, 200), comprising:
an electric motor;
an annular fan (120) for ventilating the motor, comprising a fan rotor having at least one blade (121) and at least one permanent magnet (123); and
a coil (140);
wherein the fan (120) and the coil (140) are configured to generate electricity when the at least one permanent magnet passes the coil (140) for powering an auxiliary device (230).

2. The electric machine of claim 1, wherein the at least one permanent magnet (123) is arranged at a radial outer end portion (122) of the fan rotor.

3. The electric machine of any one of the preceding claims, wherein the at least one permanent magnet (123) is arranged at a tip of the at least one blade (121).

4. The electric machine of any one of the preceding claims, wherein the fan rotor comprises a plurality of blades (121), and wherein one permanent magnet (123) is arranged at the tip of each of the blades (121).

5. The electric machine of claim 1 or 2, wherein the fan (120) comprises an annular frame attached to the radial outer end of the at least one blade (121), and wherein the at least one permanent magnet (123) is arranged on or within the annular frame.

6. The electric machine of claim 5, comprising a plurality of permanent magnets (123) spaced around the annular frame.

7. The electric machine of any one of the preceding claims, wherein the coil (140) is fixedly connected to the electric machine and is non-moving.

8. The electric machine of any one of the preceding claims, wherein the coil (140) is disposed adjacent to a radial outer perimeter (124) defined by the fan rotor.

9. The electric machine of any one of the preceding claims, comprising a plurality of coils (140) spaced around the radial outer perimeter (124) defined by the fan (120).

10. The electric machine of any one of the preceding claims, further comprising a housing (111, 211), and wherein the coil (140) is arranged within, preferably fixedly connected to an inner side of, the housing (111, 211).

11. The electric machine of any one of the preceding claims, wherein the electric motor includes a motor shaft (102), a motor rotor fixedly connected to the motor shaft (102), and a motor stator, and wherein the fan (120) is fixedly connected to the motor shaft (102).

12. The electric machine of any one of the preceding claims, further comprising the auxiliary device (230), wherein the auxiliary device is a condition sensing device for monitoring the electric machine.

13. The electric machine of claim 12, wherein the condition sensing device includes a sensor unit that is configured to measure a parameter and to provide sensor measurement data indicative of the parameter, preferably comprising a vibration sensor, an acoustic sensor, a temperature sensor, a humidity sensor and/or a magnetic flux sensor.

14. The electric machine of any of claims 12 to 13, wherein the condition sensing device (230) includes an enclosed device housing (231) affixed on the housing (211) of the electric machine.

15. The electric machine of any of claims 12 to 14, wherein the condition sensing device is arranged within a terminal box housing of the electric machine.
